# EUROPÄISCHE PATENTSCHRIFT

(11) **EP 1 183 552 B1**
(45) Veröffentlichungstag und Bekanntmachung des Hinweises auf die Patenterteilung: **23.07.2008**
(21) Anmeldenummer: 01919136.0
(22) Anmeldetag: 22.02.2001
(51) Int. Cl.: G01S 13/93, G01S 13/86, G01S 13/87

(54) **OBJEKTDETEKTIONSSYSTEM**
SYSTEM FOR DETECTING AN OBJECT
SYSTEME DE DETECTION D'OBJET

(30) Priorität: 08.03.2000 DE 10011263
(43) Veröffentlichungstag der Anmeldung: 06.03.2002
(73) Patentinhaber: ROBERT BOSCH GMBH, 70442 Stuttgart (DE)
(72) Erfinder: ZIMMERMANN, Uwe, 71636 Ludwigsburg (DE); PRUKSCH, Achim, 74861 Neudenau (DE); UHLER, Werner, 76646 Bruchsal (DE)
(86) Internationale Anmeldenummer: PCT/DE2001/000678
(87) Internationale Veröffentlichungsnummer: WO 2001/067131

(56) Entgegenhaltungen:
- EP-A- 0 775 921
- EP-A- 0 903 714
- EP-A- 0 915 350
- WO-A-00/73818
- DE-A- 19 501 612
- US-A- 5 754 123

## Beschreibung

### Stand der Technik

Die Erfindung betrifft ein Objektdetektionssystem, insbesondere für ein Kraftfahrzeug, nach dem Anspruch 1.

Ein solches System kann beispielsweise im Rahmen einer adaptiven Fahrgeschwindigkeits- und/oder Abstandsregelung eines Kraftfahrzeugs eingesetzt werden. Eine solche Regelung kann ohne Eingriff durch den Fahrer eine zuvor eingestellte Fahrgeschwindigkeit und/oder einen zuvor eingestellten Abstand zu einem vorausfahrenden Fahrzeug oder zu sich in Fahrtrichtung befindlichen Gegenständen und/oder Objekten regeln. Dies geschieht unter entsprechender Berücksichtigung des Umfelds des Kraftfahrzeuges und gegebenenfalls weiterer Parameter wie beispielsweise den Witterungs- und Sichtbedingungen. Eine solche Regelung wird auch als Adaptive-Cruise-Control-System (ACC-System) bezeichnet. Das ACC-System muß insbesondere mit Blick auf die steigende Verkehrsdichte der heutigen Zeit flexibel genug sein, um auf alle Fahrsituationen geeignet zu reagieren. Dies erfordert wiederum eine entsprechende Objektdetektionssensorik, um in jeder Fahrsituation die für die Regelung notwendigen Messdaten zu liefern.

Für sich gesehen sind beispielsweise Sensoren für ein Autobahnfähiges ACC-System, in der Regel mit Radar- oder Lidarsensoren, bekannt, die eine Reichweite von ca. 100 bis 150 m mit einem Erfassungswinkel von ca. 10° aufweisen. Desweiteren sind für sich gesehen auch kurzreichweitige Abstandssensoren für Parkhilfesysteme bekannt, die überwiegend mit Ultraschallsensoren ausgerüstet sind.

Aus der DE 196 22 777 A1 ist ein Sensorsystem zur automatischen relativen Positionsbestimmung zwischen zwei Objekten bekannt. Das Sensorsystem besteht aus einer Kombination eines winkelunabhängigen Sensors und eines winkelabhängigen Sensors. Der nicht winkelauflösende und somit winkelunabhängige Sensor ist als ein Sensor ausgeführt, der über eine Laufzeitmessung den Abstand zu einem Objekt auswertet. Als mögliche Sensoren werden RADAR-, LIDAR- oder Ultraschallsensoren vorgeschlagen. Der winkelabhängige Sensor besteht aus einer geometrischen Anordnung von optoelektronischen Sendern und Empfängern, die in Form von Lichtschranken angeordnet sind. Die Sensoren, die beide einen gemeinsamen Detektionsbereich abdecken, sind räumlich eng benachbart angeordnet. Um eine relative Position zu dem Objekt zu bestimmen, wird mittels des winkelunabhängigen Sensors der Abstand zu dem Objekt und mittels des winkelauflösenden Sensors der Winkel zu dem Objekt bestimmt. Auf Basis des Abstands und des Winkels zu dem Objekt ist die relative Position zu dem Objekt bekannt. Als Alternative zu der genannten Anordnung von optoelektronischen Sendern und Empfängern wird eine Verwendung von zwei Sensoren vorgeschlagen, die gemeinsam nach dem Triangulationsprinzip den Winkel zu dem Objekt bestimmen.

Die US 5 454 123 zeigt eine hybride Ultraschall- und Radareinparkhilfe für ein Fahrzeug, das den Fahrer beim Rückwärtseinparken unterstützt. Das Radarsystem weist dabei eine größere Reichweite auf als das Ultraschallsystem. Beim Einparken mit niedrigen Geschwindigkeiten oder im Stillsatnd werden die vom Radarsensor gelieferten Messwerte ignoriert und nur die Ultraschallsignale ausgewertet. Bei Geschwindigkeiten zwischen einem unteren Schwellenwert von etwa 5 mph und einem oberen Schwellenwert von etwa 10 mph werden die Signale beider Systeme verwendet um dem Fahrer die Entfernung zum nächsten Objekt anzuzeigen.

Die EP 0 915 350 A2 zeigt eine Vorrichtung für ein Straßenfahrzeug zur Ermittlung fahrspurverlaufsindikativer Daten, die eine Fahrspurerkennungssensorikeine Objektpositionssensorik und eine Fahrzeugeigenbewegungssensorik beinhaltet. Einer Schätzsensorik werden die Fahrspurerkennungsmeßdaten, die Objektpositionsmessdaten und die Fahrzeugeigenbewegungsmessdaten zugeführt und in deren Abhängigkeit die Fahrspurkrümmung und/oder die Querposition des jeweiligen Objektes mittels eines dynamischen Fahrzeugbewegungsmodells geschätzt.

Aus der GB 2 279 841 ist ein Geschwindigkeitsregler bekannt, bei dem der Fahrer eine gewünschte Geschwindigkeit vorgeben kann und das Fahrzeug daraufhin selbsttätig beschleunigt und verzögert, ohne dass der Fahrer seinen Fuß auf dem Fahrpedal belassen muß. Mittels eines optischen Lidarsystems wird der Bereich vor dem Fahrzeug erfasst und zur Auswertung in einem 2-dimensionale Datenfeld mit den Koordinaten Entfernung und Azimutwinkel eingetragen, in welchen horizontalen Winkeln und in welchen Abständen Objekte detektiert wurden.

Weiterhin ist auch aus der DE 196 16 038 A1 ein Objektdetektionssystem bekannt, bei dem auch ein optischer Sender für einen Lichtstrahl mit veränderlichem Sendewinkel und ein winkelauflösender optischer Empfänger vorhanden sind. Der ausgesendete Lichtstrahl wird hier derart moduliert, dass aus der Phasendifferenz des gesendeten und des empfangenen Lichtstrahls bis zu einer bestimmten Entfernung auch die Lage des Objekts innerhalb des Winkelbereichs des ausgesendeten Lichtstrahls ermittelbar ist.

Bei einem anderen, aus der DE 42 42 700 A1 bekannten Objektdetektionssystem wird mit einem Mikrowellen-Radarsensor die Erfassung von, insbesondere auch in einer größeren Distanz vorausfahrenden, Objekten an einem Fahrzeug ermöglicht. Auch dieser Radarsensor ist ein Baustein des oben erwähnten Fahrzeugsicherheitssystems, bei dem ständig Informationen über den Abstand und die Relativgeschwindigkeit des Fahrzeuges zu den vorausfahrenden Fahrzeugen in einem vorgegebenen, allerdings eingeschränkten Winkelbereich verarbeitet werden.

Es ist die Aufgabe der vorliegenden Erfindung, ein Objektdetektionssystem bereitzustellen, das je nach Fahrsituation einen schmalen und weit reichenden Sensorerfassungsbereich oder einen kürzeren und breiteren Sensorerfassungsbereich aufweist.

Erfindungsgemäß wird dieses durch die Merkmale des unabhängigen Anspruchs gelöst. Vorteilhafte Ausgestaltungen ergeben sich aus den Unteransprüchen.

### Vorteile der Erfindung

Bevorzugt ist ein Objektdetektor gemäß der Erfindung ein Radarsensor, der in einem ersten Beriebsmodus eine relativ große Detektionsreichweite bei einem relativ kleinen Winkelerfassungsbereich und in einem zweiten Betriebsmodus oder erweiterten ersten Betriebsmodus eine relativ dazu geringe Detektionsreichweite bei einem vergrößerten Winkelerfassungsbereich aufweist.

Mit der Erfindung kann ein vorteilhaftes Sensorkonzept für das eingangs erwähnte ACC-System realisiert werden, das es gestattet, die Fahrzeuge vor dem mit dem ACC-System ausgerüsteten Fahrzeug auf dem eigenen sowie auf dem linken und rechten benachbarten Fahrstreifen bis zu einer vorgegebenen maximalen Entfernung vollständig zu erfassen. Der zweite Betriebsmodus mit der relativ geringen Reichweite kann hier beispielsweise einen sog. Nahbereich von bis zu ca. 30 bis 40 m bis zu einem minimalen Kurvenradius von ca. 100 m überdecken.

Das für sich gesehen aus dem eingangs erwähnten Stand der Technik bekannte Mikrowellen-Fernbereichsradar arbeitet z.B. in einem Frequenzbereich von 77 GHz und ist zur Erfassung von Objekten vor dem ACC-Fahrzeug bis zu 150 m geeignet, bei einem Winkelerfassungsbereich von ca. 10°. Diese Radarsensoren können so erweitert werden, dass sie in dem zusätzlichen Betriebsmodus den erweiterten Winkelerfassungsbereich bei verkürzter Reichweite zur Erfassung des Nahbereichs ermöglichen. Alternativ dazu lassen sich diese Radarsensoren auch so ausgestalten, dass sie standardmäßig im Nahbereich einen erweiterten Winkelerfassungsbereich aufweisen.

Das erfindungsgemäße Objektdetektionssystem enthält weiterhin einen sog. Ultra-Nahbereichssensor, der gegenüber dem zuvor beschriebenen Radarsensor eine nochmals geringere Detektionsreichweite und einen großen Winkelerfassungsbereich aufweist. Der zuerst erwähnte Radarsensor wird somit mit einer Abstandssensorik kombiniert, die die Objekte unmittelbar vor dem mit dem ACC-System ausgerüsteten Fahrzeug im sog. Ultranahbereich von ca. 0 bis 7 m erfassen. Der Ultra-Nahbereichssensor weist hier eine Breite in der Winkelerfassung auf, die sowohl die Breite des Fahrzeugs als auch Teile der rechten und linken Nachbarspur der Fahrbahn abdeckt.

Der Ultra-Nahbereichssensor kann bevorzugt ein an sich aus dem eingangs erwähnten Stand der Technik bekannter optischer Sensor, ein Ultraschallsensor sein oder auch ein Radarsensor, z.B. im 24 GHz Bereich, sein, die beispielsweise schon als sog. Parkhilfe in Fahrzeugen Anwendung finden.

Das erfindungsgemäße Objektdetektionssystem kann als zusätzlichen Objektdetektor auch noch eine Videoeinrichtung zur sicheren Spurzuordnung und Klassifikation der detektierten Objekte auf der Fahrbahn enthalten. Eine solche Videoeinrichtung kann bevorzugt als stereoskopische Kamera oder als CMOS-Kamera ausgeführt sein.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Das erfindungsgemäße Objektdetektionssystem wird anhand der Figur der Zeichnung erläutert, die ein schematisches Schaubild der Detektionsbereiche eines mit einem ACC-System ausgerüsteten Fahrzeugs zeigt.

Beschreibung des Ausführungsbeispiels

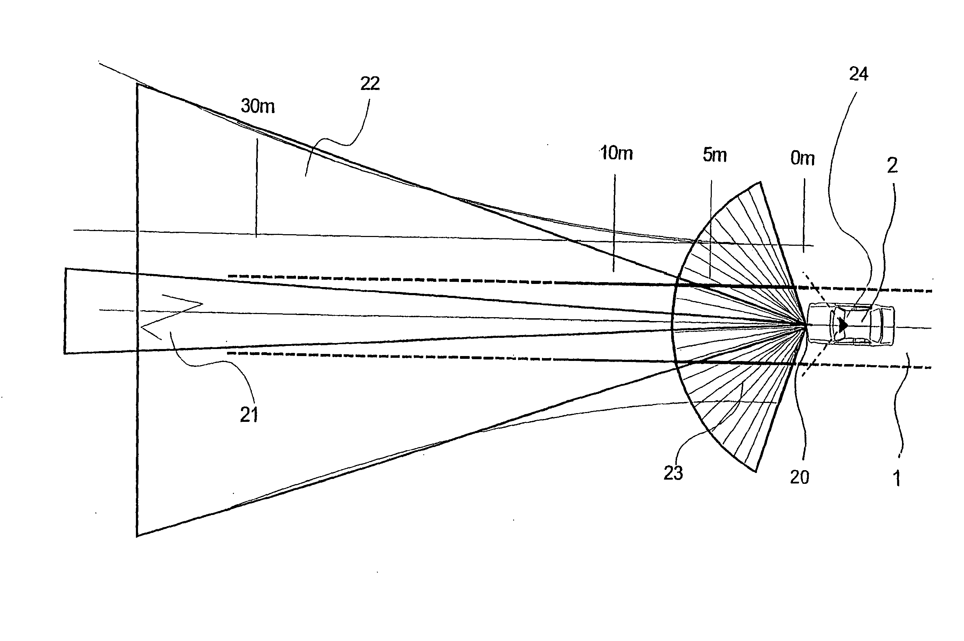

In Figur 1 ist schematisch eine Skizze mit einer mehrspurigen Fahrbahn 1 gezeigt, auf der sich ein Fahrzeug 2 befindet, das ein Objektdetektionssystem 20 aufweist, welches Bestandteil eines eingangs erwähnten ACC-Systems ist.

Das Objektdetektionssystem 20 enthält einen Radarsensor, der in einem ersten Betriebsmodus (sog. ACC-Radar) einen relativ weit reichenden Detektionsbereich 21 von bis ca. 150 m erfasst, der hier einen Winkelbereich von ca. 8° überdeckt und damit für ein Geschwindigkeitsregelsystem geeignet ist. Mit diesem Geschwindigkeitsregelsystem kann dann auch eine Abstandsregelung des Fahrzeugs 2 zu vorausfahrenden, hier nicht dargestellten Fahrzeugen realisiert werden. In einem zweiten Betriebsmodus (sog. Nahbereichsradar) wird ein zweiter Detektionsbereich 22 erfasst, der bis ca. 30 bis 40 m reicht und einen Winkelbereich von ca. 35° erfasst.

Weiterhin ist in dem Objektdetektionssystem 20 eine sog. Ultra-Nahbereichssensorik vorhanden, die bis zu einem Entfernungsbereich 23 von ca. 7 m reicht und dabei ungefähr einen Winkelbereich von bis zu 52° erfasst. Zusätzlich ist am Fahrzeug 2 eine Videoeinrichtung 24 angebracht, die in im Fahrbahnbereich eine Spurzuordnung und ggf. auch eine Objektklassifizierung durchführen kann aber nicht zu den Kernfunktionen des Basissystem gehören muss. Eine solche Videoeinrichtung kann bevorzugt als stereoskopische Kamera oder als CMOS-Kamera ausgeführt sein.

Mit dem Objektdetektionssystem 20 nach dem in der Figur gezeigten Ausführungsbeispiel kann somit ein ACC-System realisiert werden, das es gestattet, alle Objekte, die sich vor dem Fahrzeug 2 auf dem eigenen sowie auf dem linken und rechten benachbarten Fahrstreifen bis zu einer vorgegebenen maximalen Entfernung befinden, vollständig zu erfassen.

Es ist mit dem erläuterten Ausführungsbeispiel der Erfindung möglich, neben der Abstands- bzw. Geschwindigkeitsregelung und einer Parkhilfe für das Fahrzeug 2 auch eine Berücksichtigung der sog. Stehen-und-Fahren-Funktionalität (Stop & Go) auf der Fahrbahn 1 mit dem Objektdetektionssystem 20 vorzunehmen. Hiermit ist es möglich, dass die Geschwindigkeitsregelung zwischen dem Stillstand und der Höchstgeschwindigkeit des Fahrzeugs erfolgt.

## Patentansprüche

1. Objektdetektionssystem einer adaptiven Fahrgeschwindigkeits- und Abstandsregelung eines Kraftfahrzeugs (2), wobei das Kraftfahrzeug ein Objektdetektionssystem (20) mit mehreren Objektdetektoren aufweist, mit denen unterschiedliche Detektionsreichweiten und Detektionsbereiche erfasst werden,-**dadurch gekennzeichnet, dass** ein erster Objektdetektor in einem ersten Betriebsmodus Objekte mit einem weit reichenden Detektionsbereich (21) mit einer Entfernung von ungefähr 150 m und einen Winkelbereich von ungefähr 8° erfasst und in einem zweiten Betriebsmodus Objekte in einem zweiten Detektionsbereich (22) mit einer Entfernung von ungefähr 30 bis 40 m und einen Winkelbereich von ungefähr 35° erfasst und ein zweiter Objektdetektor vorgesehen ist, der Objekte in einem Entfernungsbereich von ungefähr 7 m und einem Winkelbereich bis zu 52° erfasst und dass eine Videoeinrichtung (24) vorgesehen ist, die im Fahrbahnbereich eine Spurzuordnung durchführt.

2. Objektdetektionssystem nach Anspruch 1, **dadurch gekennzeichnet, dass** die Videoeinrichtung zusätzlich eine Objektklassifikation durchführt.

3. Objektdetektionssystem nach Anspruch 1 oder 2, **dadurch gekennzeichnet, dass** die Videoeinrichtung (24) als stereoskopische Kamera ausgeführt ist.

4. Objektdetektionssystem nach Anspruch 1 oder 2, **dadurch gekennzeichnet, dass** die Videoeinrichtung (24) als CMOS-Kamera ausgeführt ist.

## Claims

1. Object detection system for an adaptive cruise controller and inter-vehicle distance control system of a motor vehicle (2), wherein the motor vehicle has an object detection system (20) with a plurality of object detectors with which different detection ranges and detection areas are sensed, **characterized in that** in a first operating mode a first object detector senses objects with a wide-ranging detection area (21) with a distance of approximately 150 m and an angular range of approximately 8°, and in a second operating mode it senses objects in a second detection area (22) with a distance of approximately 30 to 40 m and an angular range of approximately 35°, and a second object detector is provided which senses objects in a distance range of approximately 7 m and an angular range up to 52°, and **in that** a video device (24) is provided which carries out lane assignment in the carriageway area.

2. Object detection system according to Claim 1, **characterized in that** the video device additionally carries out object classification.

3. Object detection system according to Claim 1 or 2, **characterized in that** the video device (24) is embodied as a stereoscopic camera.

4. Object detection system according to Claim 1 or 2, **characterized in that** the video device (24) is embodied as a CMOS camera.

## Revendications

1. Système de détection d'objets pour une régulation adaptative de la vitesse de circulation et de distance d'un véhicule automobile (2) selon lequel le véhicule automobile comporte un système de détection d'objets (20) ayant plusieurs détecteurs d'objets permettant de saisir des portées de détection et des plages de détection différentes,
**caractérisé en ce qu'**
dans un premier mode de fonctionnement, un premier détecteur d'objets saisit les objets avec une plage de détection (21) à portée étendue, pour un éloignement d'environ 150 m et une plage angulaire d'environ 8° et dans un second mode de fonctionnement il détecte les objets dans une seconde plage de détection (22), et une distance de l'ordre de 30 à 40 m et une plage angulaire d'environ 35° et un second détecteur d'objets est prévu qui détecte les objets dans une plage d'alignement d'environ 7 m et une plage angulaire allant jusqu'à 52° et une installation vidéo (24) est prévue pour réaliser une association de trace dans une plage de voie de circulation.

2. Système de détection d'objet selon la revendication 1,
**caractérisé en ce que**
l'installation vidéo effectue en outre une classification des objets.

3. Système de détection d'objet selon l'une des revendications 1 ou 2,
**caractérisé en ce que**
l'installation vidéo (24) est une caméra stéréoscopique.

4. Système de détection d'objet selon l'une des revendications 1 ou 2,
**caractérisé en ce que**
l'installation vidéo (24) est une caméra CMOS.
